Europäisches Patentamt

European Patent Office

Office européen des brevets

(11) Publication number: **0 161 743**
**B1**

(12) **EUROPEAN PATENT SPECIFICATION**

(45) Date of publication of patent specification: **28.09.88**

(21) Application number: **85301150.0**

(22) Date of filing: **21.02.85**

(51) Int. Cl.⁴: **B 01 D 53/36**

(54) Vanadium oxide catalyst for nitrogen oxide reduction and process using the same.

(30) Priority: **22.02.84 US 582368**

(43) Date of publication of application:
**21.11.85 Bulletin 85/47**

(45) Publication of the grant of the patent:
**28.09.88 Bulletin 88/39**

(84) Designated Contracting States:
**AT BE CH DE FR GB IT LI LU NL SE**

(56) References cited:
**DE-A-2 530 822**
**DE-A-2 617 744**

**PATENT ABSTRACTS OF JAPAN, vol. 7, no. 151
(C-174) 1296r, 2nd July 1983**

(73) Proprietor: **ENGELHARD CORPORATION
70 Wood Avenue South CN 770
Iselin New Jersey 08830 (US)**

(72) Inventor: **Heck, Ronald M.
R.D. No. 2 Box 42
Frenchtown New Jersey 08825 (US)**
Inventor: **Keith, Carl D.
100 Crest Drive
Summit New Jersey 07901 (US)**
Inventor: **Farrauto, Robert J.
277 Seneca Place
Westfield New Jersey 07090 (US)**

(74) Representative: **Colgan, Stephen James et al
CARPMAELS & RANSFORD 43 Bloomsbury
Square
London WC1A 2RA. (GB)**

Courier Press, Leamington Spa, England.

## Description

The present invention concerns a catalyst assembly for reduction of nitrogen oxides contained in a gas stream and more particularly is concerned with a vanadium oxide catalyst which is protected against phosphorus contamination.

Catalytic treatment of gas streams containing nitrogen oxides to reduce the nitrogen oxides to nitrogen are of course well known in the art, including the use of catalysts containing vanadium oxide for such purposes. Nitrogen oxides occur in various types of gas streams and must be removed or reduced to nitrogen in order to avoid emissions of noxious pollutants such as NO and $NO_2$ and to meet various governmental regulations concerning control of emissions. Among such gas streams are the off-gas from nitric oxide production and exhaust gases from internal combustion engines such as natural gas or diesel fueled engines of the type commonly employed to drive pipeline pumps, to pressurize oil wells and the like.

The prior art discloses that $NH_3$ may be used to selectively reduce nigrogen oxides ($NO_x$) to nitrogen and $H_2O$, in the presence of oxygen, by use of a suitable catalyst, including a vanadium containing catalyst. U.S. Patent 4,010,238 discloses a bimetallic oxide catalyst for selective removal of nitrogen oxides, the catalyst comprising vanadium and at least one element selected from copper, zinc, tin, lead, titanium, phosphorus, chromium, iron, cobalt and nickel. This patent discloses that such catalyst, while it might be composed of particles of the bimetallic oxide only, may comprise the bimetallic oxide supported on a suitable support material such as activated alumina, alpha-alumina, silica gel, aluminosilicate, diatomaceous earth, silicon carbide, titanium oxide or the like. Thus, one possible combination from the many disclosed by this patent is a vanadium-phosphorus oxide disposed on a titania support.

U.S. Patent 4,233,183 is also concerned with a catalyst for selective reduction of nitrogen oxides and discloses (column 3, line 28 et seq.) as exemplary of catalytically active components for such a purpose a number of metal compounds, including vanadium compounds, used singly or in admixture. It is specifically disclosed that these metal compounds may be used conjointly with a phosphorus compound, a boron compound, an alkaline earth metal compound, or the like. The catalyst is disclosed as being supported upon a metal structure which may be configured into the form of a honeycomb structure. A binder such as an alumina sol, a silica sol, a titania sol, phosphoric acid or boric acid or the like is utilized to adhere the catalyst composition to the metal carrier structure. At column 2, line 28 et seq. of U.S. Patent 4,233,183, it is disclosed that hydrated titanias may be used in conjunction with the sol to form the binder material.

U.S. Patent 3,279,884 discloses a process for selective removal of nitrogen oxides from gas mixtures containing oxygen by utilization of a vanadium oxide catalyst disposed on a suitable support material to catalyze the reaction of the nitrogen oxides with ammonia to reduce the former to nitrogen and $H_2O$.

While some of the gas streams containing nitrogen oxides which are to be treated for removal or reduction of the latter contain little or no phosphorus, other such gas streams contain a considerable quantity of phosphorus compounds. For example, the exhaust gases from internal combustion engines such as the natural gas and diesel engines mentioned above contain significant quantities of phosphorus or phosphorus compounds because of the normal phosphorus compound content of the engine lubricating oils used in such engines. These compounds find their way into the exhaust gas stream wherein they tend to deposit on the catalyst through which the exhaust gas is flowed for treatment to reduce the nitrogen oxides. However, as noted by the above-mentioned prior art, it is conventional practice to utilize phosphorus compounds as a component of nitrogen oxide reduction catalysts, including those containing vanadium oxide. It therefore appears that the art has not discerned any adverse effect of phosphorus compounds on catalysts for selective nitrogen oxides reduction, including vanadium oxide catalysts.

U.S. Patent 4,134,733 ($\equiv$DE—A—2530822) discloses a catalytic converter for use in treating internal combustion engine exhaust gases wherein a noble metal catalyst such as one of the platinum group metals is dispersed on the rear section of the catalyst. The forward section of the catalyst is free of the noble metal but has a coating thereon capable of adsorbing catalyst poison which, for the noble metal catalyst, are exemplified as including lead, phosphorus and zinc compounds. In one embodiment the catalyst comprises a honeycomb type carrier, the forward section of which contains a poison-adsorbent alumina coating, and the rear section of which contains the noble metal catalyst dispersed on the alumina coating. (Forward and rear sections are as sensed in the direction of exhaust gas flow through the catalyst).

## Summary of the invention

It has surprisingly been found that vanadium oxide catalysts useful for the selective reduction of nitrogen oxides are poisoned by phosphorus or phosphorus compounds contained in the gas being treated, resulting in a severely shortened useful catalytic life of such catalyst compositions. In particular, vanadia-titania catalyst compositions have been found to be susceptible to such catalyst poisoning by phosphorus contaminant in the gas being treated.

In accordance with the present invention there is provided a catalyst assembly effective for selective catalytic reduction of nitrogen oxides with ammonia in a gas stream and comprising a catalytic member comprised of a catalytic material containing a catalytically-effective

2

amount of vanadium oxide, the assembly being characterized in that a phosphorus getter comprised of a phosphorus-retaining material is positioned upstream of the catalytic member as sensed relative to the gas flow path through the assembly.

Other preferred aspects of the invention provide one or more of the following features: the catalytic material further comprises a refractory metal oxide support, preferably titania; the phosphorus getter comprises a refractory carrier on which the phosphorus-retaining material is disposed and the catalytic member comprises a refractory carrier on which the catalytic material is disposed; the phosphorus-retaining material comprises alumina, preferably an activated alumina and more preferably an activated alumina having a surface area of about 10 to 400 $m^2$/gm or more; and the vanadium oxide comprises about 0.5 to 15%, preferably about 1 to 10%, by weight of the combined weight of the vanadium oxide and refractory metal oxide support.

In another preferred aspect of the invention there is provided a process of treating a gas containing phosphorus contaminant and nitrogen oxides to selectively catalytically reduce the nitrogen oxides with ammonia by flowing the gas through a catalytic member comprising a catalytic material containing a catalytically-effective amount of vanadium oxide, and contacting the gas with the vanadium oxide in the presence of ammonia at a temperature sufficiently high to reduce nitrogen oxides to nitrogen by reaction with ammonia, the process being characterized by flowing the gas through a phosphorus getter comprising a phosphorus-retaining material, in order to remove-phosphorus-contaminant from the gas, prior to flowing the gas through the catalytic member. The reaction temperature is generally at least about 250°C, e.g. about 250 to 400°C.

In one embodiment, the phosphorus getter is comprised of a refractory honeycomb-like carrier having a plurality of gas flow passages extending therethrough, the passages being coated with the phosphorus-retaining material. Similarly, the catalytic member may comprise a refractory honeycomb-like carrier having a plurality of gas-flow passages extending therethrough, the passages being coated with the catalytic material.

In another preferred aspect of the invention, the catalytic member comprises about 2 to 25%, preferably about 5 to 15%, by weight of the weight of the honeycomb-like carrier catalytic member.

The ammonia is preferably supplied in at least about 70%, say 70% to 110%, of the stoichiometric amount to react with all the nitrogen oxides present to reduce the latter to nitrogen.

Still other aspects of the invention comprise utilizing in the process of the invention the above-described preferred catalyst assemblies.

Brief description of the drawings

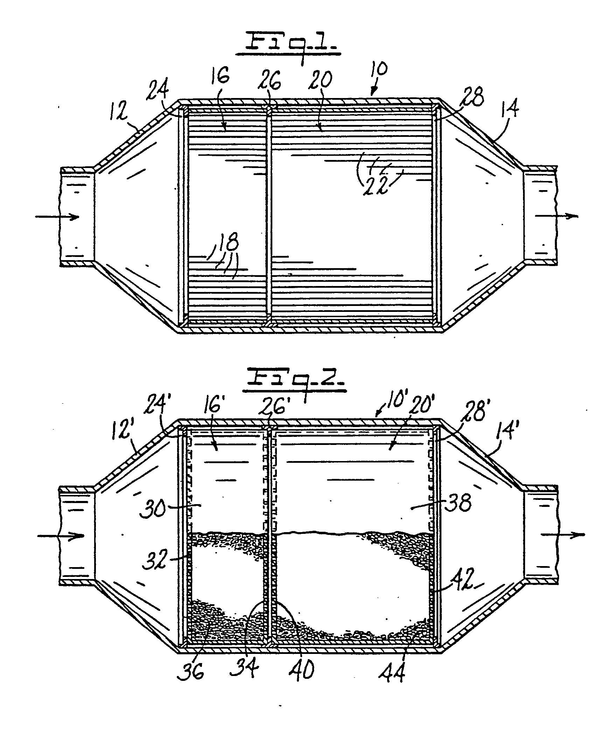

Figure 1 is a schematic view in cross-section side elevation showing an embodiment of the invention in which both the upstream phosphorus getter section and the downstream, catalytic member section comprise a honeycomb-like carrier on which phosphorus-retaining material and catalytic material are respectively dispersed; and

Figure 2 is another embodiment of the invention in which both the upstream, phosphorus getter section and the downstream, catalytic member section comprise beds of particulate carrier material having coated thereon phosphorus retaining material and catalytic material, respectively.

Description of the preferred embodiments

Generally, the catalyst assemblies of the invention may comprise any suitable vanadium oxide catalyst in combination with a phosphorus getter comprising the upstream section of the catalyst so that the gas to be treated is flowed through the phosphorus getter prior to contacting the vanadium oxide catalyst. The phosphorus getter contains or comprises a phosphorus-retaining material which will remove phosphorus contaminants from the gas stream and thereby prevent the phosphorus contaminants from being deposited on the vanadium oxide catalyst. An eminently suitable class of phosphorus-retaining materials are porous, relatively high surface area materials which will tend to absorb phosphorus and phosphorus-containing compounds. For example, a suitable phosphorus-retaining material is alumina, preferably activated alumina, by which is meant alumina having a relatively high surface area, say at least 1 and preferably at least 10 square meters per gram ($m^2$/gm), for example, 10 to 400 $m^2$/gm or more. The term activated alumina derives from the fact that such relatively high surface area aluminas, for example, gamma alumina, display some catalytic activity for certain reactions. However, when used as a phosphorus-retaining material herein the alumina is believed to serve primarily as a physical adsorbent for the phosphorus contaminants. The relative high surface area, high porosity and pore size distribution of conventional activated aluminas appear to suit them admirably for the purpose of adsorbing and retaining phosphorus contaminant flowed across or through the alumina. As used herein and in the claims, the term "phosphorus getter" is intended to mean any suitable phosphorus-retaining material present in an amount sufficient to provide the desired degree of protection, i.e., sufficient phosphorus contaminant retention capacity, for the catalytic member with which it is associated, as described in more detail below.

The physical configuration of the phosphorus getter may be of any suitable type such as beads, extrudate or other shaped particles formed into a bed of particles through which the gas is flowed. Alternatively, and preferably from the point of view of reduced pressure drop and the like, the phosphorus getter may comprise a honeycomb-like structure comprising one or more monolithic bodies having a plurality of gas flow passages extending therethrough. Such structures are well known and commercially available and may comprise refractory, relatively catalytically inert metal oxide materials such as cordierite, mullute, zirconia, alpha alumina or the like materials. For example, cylindrical-shaped cordierite members having from 10 to 600 or more parallel, square-cross section, gas flow passages per square inch of face area are commercially available.

The phosphorus-retaining material, say an activated alumina, may be coated upon the particulate beads or the like or deposited as a coating within the gas flow passages of the honeycomb-like structure. For example, it is well known in the art to deposit an alumina coating on a honeycomb structure by dipping the structure into an aqueous slurry of alumina particles, removing excess slurry from the honeycomb structure by blowing with compressed air, and then heating the alumina coated honeycomb in air, say at a temperature of up to 500°C or more, to calcine and adhere the alumina coating thereon to form a high surface area, activated alumina coating. As is known in the art, the alumina coating may be stabilized against thermal degradation by the inclusion therein of stabilizing oxides such as rare earth metal oxides, say in an amount of up to about 10% or more of the combined weight of the alumina and stabilizing metal oxide.

Like the phosphorus getter, the catalytic member of the invention may comprise a particulate catalyst such as beads, granules or extrudates of catalytic material. For example, titania beads or granules containing vanadium oxide thereon may be utilized as the catalytic member. Alternatively, the vanadium oxide alone or an a refractory metal oxide support such as titania, may be deposited on beads or particles of alumina or other suitable carrier material. Preferably however, for the same reasons of reduced pressure drop as mentioned above with respect to the phosphorus getter, the catalytic member comprises a honeycomb-like structure having the catalytic material coated on the gas flow passages thereof. For example, a cordierite honeycomb-like structure as described above may have a catalytic material comprising vanadium oxide on titania applied to the gas flow passages thereof in a manner generally similar to that described above with respect to the application of an alumina coating to the phosphorus getter.

Titania is preferred as the refractory metal oxide support for the vanadium oxide, particularly for catalysts intended for use in treating gas streams containing sulfur or sulfur compounds, because of the known resistance of titania to poisoning by sulfur. However, the vanadium oxide may be supported on any suitable refractory metal oxide support such as, for example, an alumina support material. In such case, the catalyst assembly of the invention may comprise one or more carriers, either particulate carriers or honeycomb-like structures as described above having an, e.g., alumina, coating thereon and at least the downstream section of the catalyst assembly containing the vanadium oxide catalyst so that the upstream section acts as the phopshorus getter. As used herein and in the claims, reference to the "upstream section" and the "downstream section" of the catalyst assembly is with reference to the direction of gas flow through the catalyst assembly. That is, the gas to be treated is flowed through the "upstream section" before being flowed through the "downstream section" in order that phosphorus contaminants may be removed from the gas stream and deposit on the upstream section prior to contacting the downstream section.

The catalyst assembly may comprise a monolithic and unitary honeycomb-like structure having an upstream section containing the phosphorus-retaining material and a downstream section containing the catalytic material. In such case, the catalyst will be made oversized for its intended operation to provide a "sacrificial" upstream section of the catalyst which will absorb and retain the phosphorus contaminants, leaving the downstream section relatively free thereof to provide the desired life of catalyst operation. The upstream section will preferably be free of the vanadium oxide catalyst material in order to reduce the cost of the catalyst assembly. The upstream section will comprise one or more phosphorus getters having, say, an activated alumina coating thereon as the phosphorus retaining material, and one or more downstream sections having vanadium oxide deposited on a support coating such as titania. The phosphorus getters may be separate from the catalyst member to permit removal and replacement thereof by a fresh phosphorus getter when the used one approaches its' phosphorus-retaining capacity.

The amount of phosphorus contaminant (or any other contaminant) deposited on a catalyst through which a contaminated gas stream is being flowed will depend on the affinity of the catalyst material for the contaminant under the conditions of use, the quantity of contaminant contained in the gas being flowed through the catalyst and the volumetric flow rate of the gas through the catalyst. It was noted that failure of vanadium oxide on titania catalysts used for selective reduction of nitrogen oxides in a gas stream generated by a large, stationary internal combustion engine occurred much earlier than expected. Investigation showed that the failure, surprisingly, appeared to be caused by a heavy phosphorus loading on the catalyst, which had penetrated the entire depth of the titania coating and appeared to form a chemical compound therewith having a uniform ratio of phosphorus to titania. The source of the phosphorus was determined to be the engine lubricating oil. Analysis of engine oils in use showed from about 20 to 2000 weight parts per million (wppm) of phosphorus in the form of various phosphorus compounds. The adverse effect of the phosphorus on the catalyst was surprising in view of the fact that phosphorus compounds are disclosed in the art as being suitable and desirable additives to vanadium oxide catalysts utilized for selective nitrogen oxides reduction, and that performance of the catalyst was found to fail at phosphorus levels apparently within the range of art-disclosed phosphorus content of vanadium oxide catalysts.

In order to obtain a desired effective life for a vanadium oxide-containing catalyst used to treat a phosphorus contaminated gas stream, a phosphorus getter placed upstream of the catalyst should contain a sufficient quantity of phosphorus-retaining material to provide a phosphorus retention capacity equal to the phosphorus contaminant which will be introduced into catalyst during the desired effective life. Obviously, the total capacity of phosphorus retention or absorption which is required will depend on the phosphorus contamination level of the gas being treated and the volumetric flow rate of the gas through the catalyst assembly, taking into consideration the retention efficiency of the phosphorus getter.

As used herein and in the claims, "vanadium oxide" is intended to mean and include any vanadium oxide suitable for the intended catalytic purpose, $V_2O_5$ being the oxide species usually designated. The vanadium oxide catalyst may be prepared by any known means, for example, the refractory metal oxide support, e.g., the titania, may be impregnated with a solution of a soluble vanadium compound and then heated to convert the compound to vanadium oxide. Any other suitable form of preparing the catalyst may be employed.

Referring now to the drawings, Figure 1 shows an embodiment of the invention in which the catalyst assembly is contained within a suitable cannister 10 having an inlet section 12 and an outlet section 14 through which the gas to be treated is flowed in the direction indicated by the unnumbered arrows. The upstream section 16 comprises a phosphorus getter comprised of a honeycomb-like structure having a plurality of substantially parallel gas flow passages indicated schematically at 18. A suitable phosphorus-retaining material is coated on the walls of the gas flow passages 18. The downstream section 20 of the catalyst assembly comprises a catalytic member comprised of a honeycomb-like structure having a plurality of substantially parallel gas flow passages 22 extending therethrough. Upstream section 16 and downstream section 20 are retained within cannister 10 by flanged mounting rings 24, 26 and 28. Mounting ring 26 serves to space upstream section 16 from downstream section 18. It will be appreciated that upstream section 16 and downstream section 18 may be placed in abutting face-to-face contact in an alternate embodiment of the invention. In another embodiment, both the upstream and downstream sections may comprise a unitary, monolithic honeycomb-like structure, the opposite ends of which are coated with, respectively, a phosphorus-retaining material to provide the upstream section and a catalytic material to provide the downstream section. Alternatively, either or both of sections 16 and 18 may comprise a plurality of individual honeycomb-like structures placed in either abutting or spaced apart relationship to each other.

Figure 2 shows another embodiment in which a cannister 10' has an inlet section 12' and an outlet section 14'. Gas flow through the apparatus of Figure 2 is indicated by the unnumbered arrows. Upstream section 16' and downstream section 20' each comprise cylindrical shaped enclosures filled with, respectively, a particulate phosphorus getter and a particulate catalytic member. Thus, upstream section 16' is formed of a cylindrical shaped sidewall 30 closed at its opposite ends by a foraminous inlet plate 32 and a foraminous outlet plate 34. A particulate phosphorus getter material 36 is enclosed within the structure. Upstream section 20' comprises a somewhat larger basket-like enclosure of similar construction defined by a cylindrical shaped sidewall 38, a foraminous inlet plate 40 and a foraminous outlet plate 42. A particulate catalytic material 44 is disposed within the structure. A series of retaining rings 24', 26' and 28' are affixed to the interior of cannister 10' to retain the upstream and downstream section structures in place within cannister 10'. Retaining ring 26' serves also to space the sections one from the other. In an alternate embodiment, the upstream and downstream sections 16', 20' may be placed in abutting contact with each other or a single basket-like enclosure may be utilized, the upstream end of which is filled with a particulate phosphorus getter material and the downstream end of which is filled with a particulate catalyst material, to form upstream and downstream sections of selected respective length.

It will be apparent that in other embodiments one of the upstream and downstream sections may be comprised of a particulate material and the other may be comprised of a honeycomb-like structure having parallel gas flow passages extending therethrough.

In operation, a phosphorus contaminant-containing gas to be treated is flowed into the inlet section of the devices illustrated in the drawings, in the direction shown by the unnumbered arrows, and passes therethrough, whereby phosphorus contaminant contained therein is absorbed or otherwise retained by the phosphorus-retaining material in the upstream section 16 or 16'. The phosphorus contaminant-depleted gas then passes into downstream section 20 or 20' wherein the nitrogen oxides therein are contacted with the catalytic material in the presence of ammonia which is introduced into the inlet gas, in the embodiments illustrated, at a point upstream of their entry into inlet section 12 or 12'. In other embodiments of the invention, the upstream section and downstream section may be spaced apart and provisions made for interstage introduction of the ammonia, between the upstream and downstream sections. The ammonia is usually provided in an amount sufficient to reduce enough of the nitrogen oxides content of the gas stream to nitrogen as is necessary to meet nitrogen oxides emissions standards. In order to prevent ammonia emissions, less than the stoichiometric amount of ammonia for 100% reduction of the nitrogen oxides may be utilized. For example, about 70% to 110% of the stoichiometric amount of ammonia necessary for 100% reduction of nitrogen oxides to nitrogen may be used. The nitrogen oxides reduction is usually carried out at a temperature of about 250 to 400°C.

In the Figure 1 embodiment the gas flows through parallel gas flow passages 18 and 22. In the Figure 2 embodiment the gas flows through the upstream section 16' by passing through the openings (unnumbered) in foraminous inlet plates 32, 34, 40 and 42 and through the particulate beds of, respectively, phosphorus getter material and catalytic material.

While the present invention is primarily concerned with providing a phosphorus-resistant catalyst assembly, the phosphorus getter forming part of the invention may well serve to protect the vanadia-containing catalyst against other poisons.

As used herein and in the claims, all references to the surface area of the phosphorus-retaining material are given in square meters per gram of the phosphorus-retaining material itself, e.g., in square meters per gram of activated alumina, and not in square meters per gram of the finished phosphorus getter. The latter basis of course gives a considerably lower value in cases where the phosphorus getter comprises a carrier material having a coating of the phosphorus-retaining material thereon. The surface areas are as measured by the standard BET method (Brunnauer-Emitt-Teller).

While the invention has been described in detail with respect to specific preferred embodiments thereof, it will be appreciated that variations thereto may be devised by those skilled in the art upon a reading and understanding of the foregoing,

**Claims**

1. A catalyst assembly effective for selective catalytic reduction of nitrogen oxides with ammonia in a gas stream and comprising a catalytic member comprised of a catalytic material containing a catalytically-effective amount of vanadium oxide, the assembly being characterized in that a phosphorus getter comprised of a phosphorus-retaining material is positioned upstream of the catalytic member as sensed relative to the gas flow path through the assembly.

2. The assembly of claim 1 wherein the catalytic member further comprises a refractory metal oxide support.

3. The assembly of claim 2 wherein the phosphorus getter comprises a refractory carrier on which the phosphorus-retaining material is disposed and the catalytic member comprises a refractory carrier on which the catalytic material is disposed.

4. The assembly of claim 2 wherein the refractory metal oxide support comprises titania.

5. The assembly of claim 1 wherein the phosphorus-retaining material comprises alumina.

6. The assembly of claim 5 wherein the alumina has a surface area of about 10 to 400 m²/gm.

7. The assembly of claim 2 wherein the vanadium oxide comprises about 0.5 to 15% by weight of the combined weight of the vanadium oxide and refractory metal oxide.

8. The assembly of claim 1 further characterized in that the phosphorus getter is comprised of a refractory honeycomb-like carrier having a plurality of gas flow passages extending therethrough, the passages being coated with the phosphorus-retaining material.

9. The assembly of claim 1 or claim 8 wherein the catalytic member comprises a refractory honeycomb-like carrier having a plurality of gas-flow passages extending therethrough, the passages being coated with the catalytic material.

10. The assembly of claim 8 or claim 9 wherein the phosphorus-retaining material is activated alumina and the catalytic material contains about 0.5 to 15% by weight vanadium oxide and comprises about 2 to 25% by weight of the catalytic member.

11. The assembly of claim 10 wherein the refractory metal oxide is predominantly titania.

12. The assembly of claim 10 wherein the alumina has a surface area of about 10 to 400 m²/gm, and the catalytic member is comprised of about 1 to 10% by weight vanadium oxide and comprises about 5 to 15% by weight of the catalyst member.

13. A process of treating a gas containing phosphorus contaminant and nitrogen oxides to selectively catalytically reduce the nitrogen oxides with ammonia by flowing the gas through a catalytic member comprising a catalytic material containing a catalytically-effective amount of vanadium oxide, and contacting the gas with the vanadium oxide in the presence of ammonia at a temperature sufficiently high to reduce nitrogen oxides to nitrogen by reaction with ammonia, the process being characterized by flowing the gas through a phosphorus getter comprising a phosphorus-retaining material, in order to remove phosphorus-contaminant from the gas, prior to flowing the gas through the catalytic member.

14. The process of claim 12 wherein the gas is introduced into the catalytic member at a temperature of at least about 250°C.

15. The process of claim 12 wherein the phosphorus-retaining material comprises activated alumina and the catalytic material comprises vanadium oxide and a refractory metal oxide support.

16. The process of claim 15 wherein the catalytic material comprises about 0.5 to 15% by weight vanadium oxide on a predominantly titania support and the phosphorus-retaining material comprises alumina having a surface area of about 10 to 400 m²/gm.

17. The process of claim 16 wherein the phosphorus getter comprises a honeycomb-like structure having a plurality of gas flow passages extending therethrough and coated with the phosphorus-retaining material, and the catalytic member comprises a refractory carrier having a plurality of gas flow passages extending therethrough and coated with the catalytic material.

18. The process of claim 17 wherein the catalytic material comprises about 2 to 25% by weight of the weight of the catalyst member.

19. The process of claim 18 wherein the catalytic material comprises about 1 to 10% by weight vanadium oxide.

20. The process of claim 13 wherein the ammonia is present in at least about 70% of the stoichiometric amount necessary to react with all of the nitrogen oxides present to reduce the latter to nitrogen.

21. The process of claim 13 wherein the gas is introduced into the catalytic member at a temperature of about 250 to 400°C.

## Patentansprüche

1. Katalysatoranordnung, die zur selektiven katalytischen Reduktion von Stickoxiden mit Ammoniak in einem Gasstrom wirksam ist und ein katalytisches Bauelement umfaßt, das aus einem eine katalytisch wirksame Menge Vanadiumoxid enthaltenden katalytischen Material besteht, dadurch gekennzeichnet, daß stromaufwärts vom katalytischen Bauelement, bezogen auf den Gasströmungsweg durch die Anordnung, ein Phosphorgetter angeordnet ist, der aus einem Phosphor zurückhaltenden Material besteht.

2. Anordnung nach Anspruch 1, worin das katalytische Bauelement zusätzlich einen feuerfesten Metalloxidträger umfaßt.

3. Anordnung nach Anspruch 2, worin der Phosphorgetter einen feuerfesten Träger umfaßt, auf welchem das Phosphor zurückhaltende Material angeordnet ist, und das katalytische Bauelement einen feuerfesten Träger umfaßt, auf welchem das katalytische Material angeordnet ist.

4. Anordnung nach Anspruch 2, worin der feuerfeste Metalloxidträger Titandioxid umfaßt.

5. Anordnung nach Anspruch 1, worin das Phosphor zurückhaltende Material Aluminiumoxid umfaßt.

6. Anordnung nach Anspruch 5, worin das Aluminiumoxid eine Oberfläche von etwa 10 bis 400 m²/g aufweist.

7. Anordnung nach Anspruch 2, worin das Vanadiumoxid etwa 0,5 bis 15 Gew.-% des Gesamtgewichtes aus Vanadiumoxid und feuerfestem Metalloxid ausmacht.

8. Anordnung nach Anspruch 1, weiterhin dadurch gekennzeichnet, daß der Phosphorgetter aus einem feuerfesten honigwabenförmigen Träger mit einer Mehrzahl von sich durch diesen erstreckenden Gasströmungsdurchgängen besteht, worin die Durchgänge mit dem Phosphor zurückhaltenden Material bedeckt sind.

9. Anordnung nach Anspruch 1 oder 8, worin das katalytische Bauelement einen feuerfesten honigwabenartigen Träger mit einer Vielzahl von sich durch diesen erstreckenden Gasströmungsdurchgängen besteht, worin die Durchgänge mit dem katalytischen Material bedeckt sind.

10. Anordnung nach Anspruch 8 oder 9, worin das Phosphor zurückhaltende Material aktiviertes Aluminiumoxid ist und das katalytische Material etwa 0,5 bis 15 Gew.-% Vanadiumoxid enthält und etwa 2 bis 25 Gew.-% des katalytischen Bauelementes ausmacht.

11. Anordnung nach Anspruch 10, worin das feuerfeste Metalloxid überwiegend Titandioxid ist.

12. Anordnung nach Anspruch 10, worin das Aluminiumoxid eine Oberfläche von etwa 10 bis 400 m²/g aufweist und das katalytische Bauelement aus etwa 1 bis 10 Gew.-% Vanadium gebildet ist und etwa 5 bis 15 Gew.-% des katalytischen Bauelementes ausmacht.

13. Verfahren zur Behandlung eines Phosphorverunreinigungen und Stickoxide enthaltenden Gases zur selektiven katalytischen Reduktion der Stickoxide mit Ammoniak durch Führen des Gases durch ein katalytisches Bauelement, das ein eine katalytisch wirksame Menge Vanadiumoxid enthaltendes katalytisches Material enthält, und In-Berührung-Bringen des Gases mit dem Vanadiumoxid in Gegenwart von Ammoniak bei einer zur Reduktion von Stickoxiden zu Stickstoff durch Umsetzung mit Ammoniak ausreichend hohen Temperatur, dadurch gekennzeichnet, daß das Gas durch einen Phosphorgetter, der ein Phosphor zurückhaltendes Material enthält, zur Abtrennung von Phosphorverunreinigungen aus dem Gas geführt wird, bevor das Gas durch das katalytische Bauelement geführt wird.

14. Verfahren nach Anspruch 13, worin das Gas bei einer Temperatur von wenigstens etwa 250°C in das katalytische Bauelement eingeführt wird.

15. Verfahren nach Anspruch 13, worin das Phosphor zurückhaltende Material aktiviertes Aluminiumoxid umfaßt und das katalytische Material Vanadiumoxid und einen feuerfesten Metalloxidträger umfaßt.

16. Verfahren nach Anspruch 15, worin das katalytische Material etwa 0,5 bis 15 Gew.-% Vanadiumoxid auf einem überwiegend aus Titandioxid bestehenden Träger umfaßt und das Phosphor zurückhaltende Material Aluminiumoxid mit einer Oberfläche von etwa 10 bis 400 m²/g umfaßt.

17. Verfahren nach Anspruch 16, worin der Phosphorgetter eine honigwabenartige Struktur mit einer Vielzahl von sich durch diese erstreckenden und mit dem Phosphor zurückhaltenden Material bedeckten Gasströmungsdurchgängen umfaßt, und das katalytische Bauelement einen feuerfesten Träger mit einer Vielzahl von sich durch diesen erstreckenden und mit dem katalytischen Material bedeckten Gasströmungsdurchgängen umfaßt.

18. Verfahren nach Anspruch 17, worin das katalytische Material etwa 2 bis 25 Gew.-% des Gewichtes des katalytischen Bauelementes ausmacht.

19. Verfahren nach Anspruch 18, worin das katalytische Material etwa 1 bis 10 Gew.-% Vanadiumoxid umfaßt.

20. Verfahren nach Anspruch 13, worin das Ammoniak in einer Menge von wenigstens etwa 70% der stöchiometrischen Menge vorliegt, die zur Reaktion mit allen vorliegenden Stickoxiden zur Reduktion der Oxide zu Stickstoff erforderlich ist.

21. Verfahren nach Anspruch 13, worin das Gas bei einer Temperatur von etwa 250 bis 400°C in das katalytische Bauelement eingeführt wird.

**Revendications**

1. Ensemble catalytique efficace pour la réduction catalytique sélective des oxydes d'azote avec l'ammoniac dans un courant de gaz et comprenant un élément catalytique comportant un matériau catalytique contenant une quantité catalytiquement efficace d'oxyde de vanadium, l'ensemble étant caractérisé en ce qu'un piège à phosphore comprenant un matériau retenant le phosphore est placé en amont de l'élément catalytique, la direction étant fixée par rapport au trajet d'écoulement du gaz à travers l'ensemble.

2. Ensemble selon la revendication 1, dans lequel l'élément catalytique comprend en outre un support d'oxyde métallique réfractaire.

3. Ensemble selon la revendication 2, dans lequel le piège à phosphore comprend un support réfractaire sur lequel est disposé le matériau retenant le phosphore et dans lequel l'élément catalytique comprend un support réfractaire sur lequel est disposé le matériau catalytique.

4. Ensemble selon la revendication 2, dans lequel le support d'oxyde métallique réfractaire comprend l'oxyde de titane.

5. Ensemble selon la revendication 1, dans lequel le matériau retenant le phosphore comprend l'alumine.

6. Ensemble selon la revendication 5, dans lequel l'alumine possède une aire spécifique comprise entre environ 10 et 400 m²/g.

7. Ensemble selon la revendication 2, dans lequel l'oxyde de vanadium comprend d'environ 0,5 à 15% en poids du poids combiné de l'oxyde de vanadium et de l'oxyde métallique réfractaire.

8. Ensemble selon la revendication 1, caractérisé en outre en ce que le piège à phosphore comprend un support réfractaire de type alvéolaire possédant plusieurs passages d'écoulement du gaz qui s'y développent, les passages étant recouverts avec le matériau retenant le phosphore.

9. Ensemble selon la revendication 1 ou 8, dans lequel l'élément catalytique comprend un support réfractaire de type alvéolaire possédant plusieurs passages d'écoulement du gaz qui s'y développent, les passages étant recouverts avec la matériau catalytique.

10. Ensemble selon la revendication 8 ou 9, dans lequel le matériau retenant le phosphore est de l'alumine activée et le matériau catalytique contient d'environ 0,5 à 15% en poids d'oxyde de vanadium et comprend d'environ 2 à 25% en poids de l'élément catalytique.

11. Ensemble selon la revendication 10, dans lequel l'oxyde de métal réfractaire est essentiellement l'oxyde de titane.

12. Ensemble selon la revendication 10, dans lequel l'alumine possède une aire spécifique comprise entre environ 10 et 400 m²/g, et l'élément catalytique comprend d'environ 1 à 10% en poids d'oxyde de vanadium et comprend d'environ 5 à 15% en poids de l'élément de catalyseur.

13. Procédé de traitement d'un gaz contenant un contaminant phosphoreux et des oxydes d'azote pour réduire catalytiquement et sélectivement les oxydes d'azote avec de l'ammoniac, par écoulement du gaz à travers un élément catalytique comprenant un matériau catalytique contenant une quantité catalytiquement efficace d'oxyde de vanadium et par mise en contact du gaz avec l'oxyde de vanadium en présence de l'ammoniac à une température suffisamment élevée pour réduire les oxydes d'azote en azote par réaction avec l'ammoniac, le procédé étant caractérisé par l'écoulement du gaz à travers un piège à phosphore comprenant un matériau retenant le phosphore, afin d'éliminer le contaminant phosphoreux du gaz, avant l'écoulement du gaz à travers l'élément catalytique.

14. Procédé selon la revendication 12, dans lequel on introduit le gaz dans l'élément catalytique à une température d'au moins environ 250°C.

15. Procédé selon la revendication 12, dans lequel le matériau retenant le phosphore comprend de l'alumine activée et dans lequel le matériau catalytique comprend de l'oxyde de vanadium et un support d'oxyde métallique réfractaire.

16. Procédé selon la revendication 15, dans lequel le matériau catalytique comprend d'environ 0,5 à 15% en poids d'oxyde de vanadium sur un support essentiellement de dioxyde de titane et dans lequel le matériau retenant le phosphore comprend de l'alumine ayant une aire spécifique comprise entre environ 10 et 400 m²/g.

17. Procédé selon la revendication 16, dans lequel le piège à phosphore comprend une structure de type alvéolaire possédant plusieurs passages d'écoulement du gaz qui s'y développent et recouverts avec le matériau retenant le phosphore, et dans lequel l'élément catalytique comprend un support réfractaire possédant plusieurs passages d'écoulement de gaz qui s'y développent et recouverts avec le matériau catalytique.

18. Procédé selon la revendication 17, dans lequel le matériau catalytique comprend d'environ 2 à 25% en poids du poids de l'élément catalytique.

19. Procédé selon la revendication 18, dans lequel le matériau catalytique comprend d'environ 1 à 10% en poids d'oxyde de vanadium.

20. Procédé selon la revendication 13, dans lequel l'ammoniac est présent en au moins environ 70% de la quantité stoechiométrique nécessaire pour réagir avec tous les oxydes d'azote présents, pour réduire ces derniers en azote.

21. Procédé selon la revendication 13, dans lequel on introduit le gaz dans l'élément catalytique à une température comprise entre environ 250 et 400°C.

0 161 743

## Fig.1.

## Fig.2.

1